# EUROPEAN PATENT APPLICATION

(11) **EP 1 511 306 A1**
(43) Date of publication of application: **02.03.2005**
(21) Application number: 03292149.6
(22) Date of filing: 01.09.2003
(51) Int. Cl.: H04N 5/76, H04N 17/06, G11B 27/36

(54) **Method for detecting source status changes during time-shift recording**

(71) Applicant: Thomson Licensing S.A., 92648 Boulogne Cedex (FR)
(72) Inventor: Kwok, Kwong Hang, 730375 Singapore (SG)
(74) Representative: Rossmanith, Manfred, Dr.

(57) **Abstract**

A method is suggested for detecting a change in the status of a data source the signal of which is recorded beginning at a first time and reproduced beginning at a second time which is later than the first time. In order to prematurely inform a user about unwanted changes in the data stream originating from the data source while reproducing recorded content, the signal to be recorded from the source is permanently monitored for properties indicating an unchanged data stream. Upon detecting a change in the data stream the user is informed, e.g., via an on-screen-display. A menu offering options for further operation or correcting a possible fault is provided to the user. Further a device incorporating the method is suggested.

## Description

The invention relates to a method for detecting source status changes in apparatus for recording and reproducing data streams. In particular, the inventive method relates to devices for recording and reproducing broadcast and/or television signals.

Devices for recording streamed data, such as broadcast or television signals, are known as video tape recorder or VCR. Conventional video recorders use a tape-like means for sequentially recording the broadcast or television signal. More recent developments in storage technologies brought up recording and reproducing means, which allow for simultaneously recording and reproducing the recorded content. These new devices are often also referred to as PVR, an acronym for Personal Video Recorder. These PVR may be used in the conventional way to record a broadcast or television program and reproduce the recorded program at any time after the recording is terminated. The PVR may also be used to view recorded programs in a time-shift recording manner. Time-shift recording allows for beginning to record a program and starting to reproduce the portion of the program which is already recorded whilst the recording of the remaining program continues. This feature may, for example, be used if a program which a user wants to view begins at a certain time before the user is in the place where he usually watches TV programs. If, for example, a program starts at 8:00 p.m. and the user is coming home at 8:30 p.m. he would have to wait until the complete program is recorded if he uses a conventional video tape recorder. If the user uses a personal video recorder or PVR, he can immediately start to replay the already recorded portion of the program whilst simultaneously continuing to record the program to the end. It is also possible to intentionally record a program from the beginning but start replaying the already recorded portion of the program a certain time after the recording has begun in order to be able to skip advertisement blocks or other interruptions of the program. Since skipping fixed time intervals is generally fast and easily performed with PVRs, the visible interruption of the program is kept short.

However, if the user uses a stand-alone personal video recorder, which is recording a signal from an external source, an unintended change in the source's channel may remain undiscovered during time-shift mode until the user reaches the point in the recording at which the channel changes occurred. This holds true especially if the PVR does not recognize the channel switching command to the video source or if an interruption to the program is caused by other failures. These other failures may be, for example, an interrupted connection cable or a program interruption on the broadcaster's side or in the transmission channel.

It is, therefore, desirable to provide a method and a device, which early informs a user about the occurrence of errors or failures during time-shift recoding which will appear later during reproduction.

The inventive method as disclosed in claim 1 proposes a method for early informing a user about errors or failures during time-shift recording and reproduction. Advantageous embodiments and developments are disclosed in the subclaims. A device performing the inventive method is disclosed in claim 8.

The inventive method comprises permanently monitoring the signal to be recorded from the source for properties indicating a corrupt data stream and informing the user immediately upon detecting a corruption of the data stream. Depending on the type of error a suggestion for further actions to take may be included in the message, e.g., briefly display the program which is currently recorded for checking, or cancel recording.

Permanent monitoring can be performed by monitoring the vertical and / or the horizontal sync signals of a video signal, e.g. a signal according to the CVBS standard. If, e.g., a set top box is used as the signal source, and the user unintentionally switches the channel, the sync signals will be missing for a short time during channel change. The interrupted or missing sync signals indicate a corrupt data stream. The corruption is detected and a message is issued on the display informing the user about the short interruption and the type of corruption or error. In the above-mentioned example a message may contain the information that video sync is missing. The message may also comprise a suggestion for further action. In this example it may be suggested to briefly switch to the current program which is recorded in order to check whether the channel is still the same as originally selected. Of course, the currently recorded program may be displayed as a small image in a picture in picture display for checking.

In another embodiment of the inventive method the sound volume is monitored. If the sound volume is low for a predetermined time, a message informing the user about the missing sound may be issued. If the user had unintentionally set the source into mute mode, he is now enabled to quickly restore normal condition for recording.

In another development of the method supplementary information associated to a program is monitored. Supplementary information may comprise video text information, teletext, or electronic program guide (EPG) information. In certain areas video program system (VPS) information is broadcast together with the program. The VPS signal carries information which allows for unambiguous identification of a station. Where available, the VPS signal may be monitored in order to achieve the object of the invention.

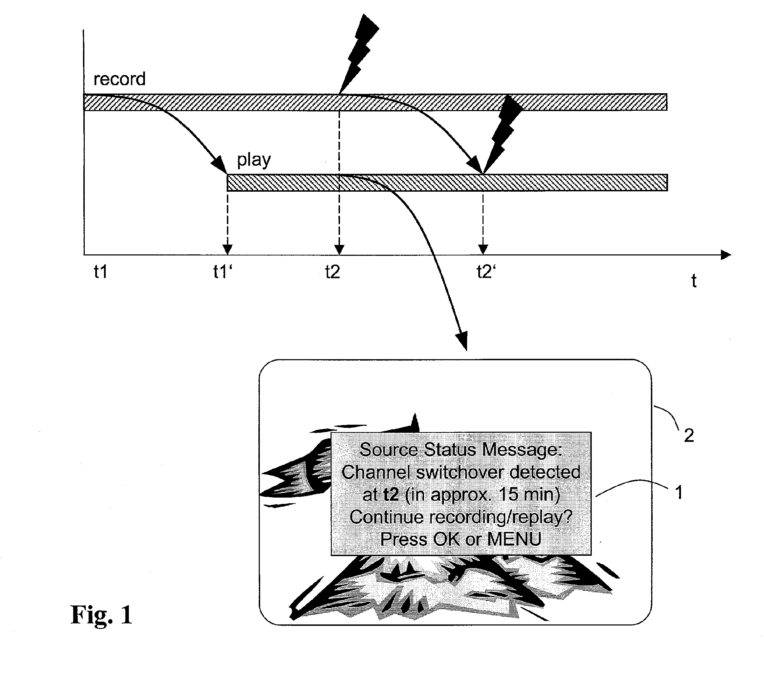

The invention will be described in the following with reference to the drawing. In the drawing, the sole figure shows an exemplary timing schedule for time shift recording and issuing an error message.

In the figure a time diagram with two horizontal time bars is shown. The upper time bar represents the transmission of a program which is to be recorded. The program starts at a time instant t1 and is continued to a time instant which is not shown in the figure. The lower horizontal bar represents the reproduction of the recorded program. The reproduction starts at a time instant t1'. In the course of the transmission of the program which is recorded, and error occurs at a time instant t2. The error or corruption is represented by a black lightning symbol. Reproduction is started with a delay of t1' - t1. If the user were not notified of the occurrence of an error or corruption, the time period t2' - t2 would pass before the error or corruption would be reproduced. According to the invention the status of the source signal is monitored for errors or corruptions. In the moment when the error corruption is detected, a message is issued. The issuing of the message is represented in the figure as a message box 1 which is overlaid over the reproduced image on a screen 2. The message contains information about the type of error or corruption and the estimated time in which the error or corruption will occur. Also displayed is a suggestion for further actions. The user may now decide how to react on the notification. In the example, pressing the OK button would continue the current operating mode and pressing the MENU button would, for example, open a dialog box with more options available. As was described above it is also possible to combine the message with a picture-in-picture display of the currently recorded signal.

In case a recording is currently made but the reproduction has not been started yet, it is also possible to create an index or bookmark which contains the time instant when an error or corruption occurred. If reproduction starts after a bookmark has been created it is conceivable to display one or a list of bookmarks at the beginning of the reproduction. The user is thereby enabled to decide whether the error or corruption is negligible or if the recording is to be discarded and the recording is to be cancelled.

The invention is not limited to video recordings. It is conceivable to use the inventive method for audio streams or other streamed data which has no error correction and for which it is desirable to receive and record without any major interruption or corruption.

The inventive method is of particular advantage if the recording device can not directly interact with the source of the data stream in order to remove or correct the corruption, or if the recording device can not block or suppress commands directed to the source of the data stream which are issued unintentionally.

## Claims

1. Method for detecting a change in the status of a data source the signal of which is recorded beginning at a first time (t1) and reproduced beginning at a second time (t1'), comprising the steps of
a) permanently monitoring the signal to be recorded from the source for properties indicating a corrupted data stream;
b) informing the user upon detecting a corruption in the data stream.

2. The method of claim 1, further comprising the step of identifying the time instant (t2) when the corruption occurred.

3. The method of claim 1 or 2, further comprising the step of calculating a time (t2') in which the occurrence of the corruption is expected during current reproduction.

4. The method of any one of the preceding claims, further comprising the step of displaying a message on a display informing about the occurrence and / or the type of a corruption.

5. The method of any one of the preceding claims, further comprising the step of offering at least one selectable action for the user to interact upon occurrence of a corruption.

6. The method of any one of the preceding claims, **characterized in that** the signal is a broadcast or television signal.

7. The method of any one of the preceding claims, **characterized in that** monitoring the signal for properties indicating an uncorrupted data stream comprises monitoring the vertical and / or horizontal synchronization signals.

8. The method of any one of the preceding claims, **characterized in that** monitoring the signal for properties indicating an uncorrupted data stream comprises monitoring signals carrying supplementary information associated with the content of the data stream.

9. The method of any one of claims 1 to 3, **characterized in that** reproduction and recording are performed at least in part in parallel.

10. Device for recording and reproducing data from a data source comprising means for monitoring the signal from the source for properties indicating a corrupted data stream and means for displaying a message on a display.

11. Device according to claim 10, further comprising means for responding to a user initiated command.
